(19)

Europäisches
Patentamt
European
Patent Office
Office européen
des brevets

(11) **EP 3 006 476 A1**

(12) **EUROPEAN PATENT APPLICATION**
published in accordance with Art. 153(4) EPC

(43) Date of publication:
**13.04.2016 Bulletin 2016/15**

(21) Application number: **14800583.8**

(22) Date of filing: **23.05.2014**

(51) Int Cl.:
**C08G 2/04** (2006.01)    **C08G 2/06** (2006.01)
**C08G 2/10** (2006.01)

(86) International application number:
**PCT/JP2014/063733**

(87) International publication number:
**WO 2014/189139 (27.11.2014 Gazette 2014/48)**

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**
Designated Extension States:
**BA ME**

(30) Priority: **24.05.2013 JP 2013109937**

(71) Applicant: **Mitsubishi Gas Chemical Company,
Inc.
Tokyo 100-8324 (JP)**

(72) Inventors:
• **ITO, Akira**
**Yokkaichi-shi**
**Mie 510-0886 (JP)**
• **MIKAMI, Sunao**
**Yokkaichi-shi**
**Mie 510-0886 (JP)**

(74) Representative: **Müller-Boré & Partner
Patentanwälte PartG mbB
Friedenheimer Brücke 21
80639 München (DE)**

(54) **METHOD FOR PRODUCING OXYMETHYLENE COPOLYMER**

(57)    Provided is a method for producing an oxymethylene copolymer having excellent extrusion moldability and reduced voids in a molded article without lowering the inherent performance of an oxymethylene copolymer. Provided is a method for producing an oxymethylene copolymer, including: a step for copolymerizing a monomer raw material containing trioxane and 5-7 mass% of 1,3-dioxolane relative to the trioxane, in the presence of 0.025-0.07 mmol of boron trifluoride per mol of trioxane and 0.006-2.0 mass% of sterically hindered phenol relative to the trioxane; a step for adding a polymerization terminator to the reaction system when the polymerization yield of this copolymer has reached 92% or higher, and terminating polymerization; and a thermal stabilization step for heating and melting the crude oxymethylene copolymer in the presence of 0.05-5 mass% of an antioxidant and 0.005-5 mass% of a nitrogen-containing compound relative to the crude oxymethylene copolymer.

EP 3 006 476 A1

**Description**

FIELD OF THE INVENTION

The present invention relates to a method for producing an oxymethylene copolymer which has reduced unstable portions so as to be suitable for extrusion molding.

BACKGROUND ART

A polyoxymethylene resin has good mechanical and thermal properties. Particularly, an oxymethylene copolymer has better heat stability and moldability than those of an oxymethylene homopolymer, and therefore has been used widely as an engineering plastic. With respect to the method for producing an oxymethylene copolymer, a method for producing an oxymethylene copolymer by continuous polymerization has been known in which, using a continuous polymerization apparatus comprising a continuous polymerizer and a terminator mixing machine which are connected in series, trioxane and 1,3-dioxolane are subjected to copolymerization using boron trifluoride or a coordination compound thereof as a catalyst, wherein, at a point in time when the polymerization yield becomes at least 90%, the formed oxymethylene copolymer, which is desirably not subjected to washing step, and a polymerization terminator are contacted in the terminator mixing machine to terminate the polymerization (see, for example, patent document 1).

Patent document 1 discloses a technique for producing an oxymethylene copolymer having suppressed the formation of an unstable portion using as raw materials trioxane, 1,3-dioxolane, and boron trifluoride which can be industrially inexpensively produced and easily handled. This technique is advantageous in that the polymerization yield is high, and that no washing is needed to be performed after termination of the polymerization, thereby making it possible to reduce the cost of the monomer recovery.

Further, patent document 1 discloses that use of 1,3-dioxolane as a comonomer in the production of a polyoxymethylene resin reduces the instability of base nearly by half, and simultaneously, reduces the semicrystallization rate also nearly by half, as compared to these properties of the resin obtained by using ethylene oxide. That is, 1,3-dioxolane and ethylene oxide behave in a totally different manner as comonomers of a polyoxymethylene resin.

In that method, however, increase in the polymerization yield promotes formation of an unstable portion having a formate structure, which is not robust against heat or hydrolysis. For this reason, the amount of the unstable portion formed during the polymerization is increased at a higher polymerization yield, and this adversely affects the polymer quality of the final product, such as an increased amount of formaldehyde generated. Therefore, that method is not satisfactory.

There has also been known a technique for subjecting trioxane and a comonomer copolymerizable with trioxane to copolymerization in the presence of a cationically active catalyst, wherein, prior to the polymerization, to monomers is added a sterically hindered phenol having a molecular weight of 350 or more in an amount of 0.001 to 2.0% by weight, based on the total weight of the monomers, and then the copolymerization is conducted (see, for example, patent document 2). Specifically, patent document 2 discloses a technique in which trioxane and 1,3-dioxolane are subjected to copolymerization using an ether coordination compound of boron trifluoride as a catalyst in the presence of a sterically hindered phenol, thereby improving the alkali decomposition rate and weight loss on heating.

Further, there has been known a technique for subjecting trioxane and 1,3-dioxolane to copolymerization using an ether coordination compound of boron trifluoride as a catalyst, wherein the copolymerization is conducted using 1,3-dioxolane having added thereto a sterically hindered phenol having a molecular weight of 350 or more (see, for example, patent documents 3 and 4). However, in the technique of these documents, the polymerization yield is as low as 85% or less, and further washing is performed simultaneously with termination of the polymerization, and hence a large amount of energy is required for recovering the unreacted monomers, which is disadvantageous from an economical point of view. Therefore, there has been desired the development of a method for producing an oxymethylene copolymer by subjecting trioxane and 1,3-dioxolane to copolymerization using an ether coordination compound of boron trifluoride as a catalyst, which method is advantageous not only in that the polymer quality is improved, for example, the formation of an unstable portion having a formate structure easily affected by heat or hydrolysis is suppressed to reduce the amount of formaldehyde generated, but also in that the polymerization yield is increased.

On the other hand, the polyoxymethylene resin is also an engineering plastic having excellent balance of mechanical properties, and generally used as a so-called material for cutting, such as a round bar and a plate. However, the polyoxymethylene resin has so high crystalline properties that the resin suffers high shrinkage upon being solidified, and therefore, when the resin is melted and then molded, the resultant molded article is likely to suffer formation of voids (hereinafter, "voids" collectively refers to defect portions called, for example, cavity, microvoids, white crazing, and whitening) inside the article, and thus the formation of such voids is a problem disadvantageous in view of both the physical properties and appearance of the molded article. For example, a round bar, especially having a large diameter, is generally molded by a so-called solidification extrusion method in which a resin is solidified within a cooled die, and, in such a method, voids are likely to be formed in the middle portion of the solidified resin. The problem of voids can be solved to some extent by controlling the molding conditions, but, in recent years, there is an increasing need for solving the problem of voids by improving the resin material.

For example, as a method for reducing voids by incorporating another component into the polyoxymethylene resin, incorporation of a polyolefin or a copolymer of an olefin and a vinyl compound (see, for example, patent documents 5 and 6), incorporation of an elastomer having a soft segment having a glass transition temperature in the range of from -125 to 0°C (see, for example, patent document 7), and incorporation of poly-1,3-dioxolane (see, for example, patent document 8) have been proposed. However, these methods have such problems as degradation of desirable properties inherent to polyoxymethylene resins including mechanical properties, heat stability, and weathering resistance; gas generation by their decomposition, and insufficient void reduction; and the above-mentioned need cannot be satisfied.

From the fact that voids formed in the resin being extrusion molded are reduced by lowering the semicrystallization rate of a polyoxymethylene resin, a polyoxymethylene resin material for cutting comprising a polyoxymethylene resin having an isothermal crystallization rate of 200 seconds or more at 150°C has been proposed (see, for example, patent document 9). In this case, as a means for lowering the isothermal crystallization rate, use of a polyoxymethylene resin with an increased molecular weight, in other words, use of that with a melt index of 2.0 g/10 minutes or less is required. Although the isothermal crystallization rate of the resin can be reduced by the increase of the molecular weight, this method has a fatal problem from an industrial point of view. Specifically, impurities in a polyoxymethylene resin tend to serve as a chain terminator during its polymerization, and it is extremely difficult to achieve a high-molecular weight resin with a melt index of 2.0 g/10 minutes or less, unless a cross-linked or branched structure is introduced into the resin. Even if such a resin can be achieved, the productivity is markedly lowered, and thus this method is disadvantageous from the industrial viewpoint. Further, a polyoxymethylene resin with an increased molecular weight has problems in that increase of the viscosity of the resin causes a large load on the extruder during the molding and lowers the moldability, and in that the resin being plasticized is likely to suffer thermal decomposition due to the heat generated by shear.

For solving the problem of patent document 9 in which the semicrystallization rate is reduced by increasing the molecular weight of the resin, there has been proposed a polyoxymethylene resin having a semicrystallization rate of 200 seconds or more at 150°C, which is obtained by introducing 1.7 to 20 mol of oxyalkylene units, relative to 100 mol of the oxymethylene units (see, for example, patent document 10). It has generally been known that, by increasing the comonomer amount, the polyoxymethylene resin becomes poor in the crystalline properties and is reduced in the semicrystallization rate. However, when a comonomer is introduced into the polyoxymethylene resin in such an amount that a satisfactorily reduced semicrystallization time is obtained, another problem arises in that the lowered crystalline properties adversely affect the desirable mechanical properties inherent to polyoxymethylene resins.

PRIOR ART REFERENCES

Patent Documents

Patent document 1: JP H08-325341 A
Patent document 2: JP H03-63965 B
Patent document 3: JP H07-242652 A
Patent document 4: JP H11-269165 A
Patent document 5: JP H06-212054 A
Patent document 6: JP H07-207117 A
Patent document 7: JP H07-292216 A
Patent document 8: JP H09-067503 A
Patent document 9: JP H09-052926 A
Patent document 10: JP 2003-064141 A

SUMMARY OF THE INVENTION

Problems to be Solved by the Invention

In view of the above, an object of the present invention is to continuously produce in high polymerization yield an oxymethylene copolymer which has improved polymer quality such that, for example, the formation of an unstable structure easily affected by heat or hydrolysis due to a formate structure is suppressed and that the amount of formaldehyde generated is reduced, and which has excellent extrusion moldability, especially excellent void reducing effect.

Means to Solve the Problems

The present inventors have conducted extensive and intensive studies with a view toward solving the above-mentioned problems. As a result, they found that the above object can be achieved by a method for producing an oxymethylene copolymer by subjecting a monomer raw material comprising trioxane and 1,3-dioxolane to copolymerization using boron trifluoride as a catalyst, wherein trioxane and a specific amount of 1,3-dioxolane are subjected to copolymerization in the presence of a specific amount of a sterically hindered phenol, and, at a point in time when the polymerization yield becomes 92% or more, the formed copolymer and a polymerization terminator are contacted to terminate the polymerization, to obtain a crude oxymethylene copolymer, and further the crude oxymethylene copolymer is thermally stabilized by heat-melting in the presence of specific amounts of an antioxidant and a nitrogen-containing compound, and achieved the present invention based on the finding.

Thus, the present invention provides the following method:

a method for producing an oxymethylene copolymer, comprising the steps of:

subjecting a monomer raw material comprising trioxane and 1,3-dioxolane in an amount of 5 to 7% by mass based on the mass of the trioxane, to a copolymerization reaction, in the presence of boron trifluoride in a proportion of 0.025 to 0.07 mmol per 1 mol of the trioxane and a sterically hindered phenol in an amount of 0.006 to 2.0% by mass based on the mass of the trioxane;
at a point in time when the copolymerization reaction gives a polymerization yield of 92% or more, adding a polymerization terminator to the reaction system to terminate the copolymerization reaction, to obtain a crude oxymethylene copolymer; and
thermally stabilizing the crude oxymethylene copolymer by heat-melting the crude oxymethylene copolymer in the presence of an antioxidant in an amount of 0.05 to 5% by mass and a nitrogen-containing compound in an amount of 0.005 to 5% by mass, each based on the mass of the crude oxymethylene copolymer.

Effect of the Invention

By the method for producing an oxymethylene copolymer of the present invention, when subjecting trioxane and 1,3-dioxolane to copolymerization using boron trifluoride as a catalyst, the formation of an unstable portion having a formate structure easily affected by heat or hydrolysis can be suppressed, and therefore the polymer quality can be improved, for example, the amount of formaldehyde generated from the obtained copolymer can be reduced. And, in the method of the present invention, the polymerization yield can be increased, hence the cost of the monomer recovery can be reduced, and this is of great commercial significance. In addition, by incorporating a specific amount of a comonomer, the obtained copolymer has a feature such that the extrusion moldability is excellent and an extrusion molded article obtained from the copolymer has far less voids formed therein. Thus, the productivity can be remarkably improved. Moreover, when a molded article obtained by extrusion molding from the copolymer or a resin composition comprising the copolymer is processed by cutting as a polyoxymethylene resin material, high-quality electric and electronic parts, automobile parts, and various industrial parts can be very advantageously produced.

MODE FOR CARRYING OUT THE INVENTION

The method for producing an oxymethylene copolymer of the present invention comprises the steps of: subjecting a monomer raw material comprising trioxane and a specific amount of 1,3-dioxolane to copolymerization in the presence of a specific amount of boron trifluoride and a specific amount of a sterically hindered phenol, and, at a point in time when the polymerization yield becomes 92% or more, contacting the formed copolymer with a polymerization terminator to terminate the copolymerization reaction, to obtain a crude oxymethylene copolymer; and thermally stabilizing the crude oxymethylene copolymer by heat-melting the crude oxymethylene copolymer in the presence of specific amounts of an antioxidant and a nitrogen-containing compound. Hereinbelow, the present invention will be described in detail.

The trioxane (1,3,5-trioxane) used as a monomer in the present invention is a cyclic trimer of formaldehyde. It is commercially available, or can be produced by a method conventionally known to those skilled in the art. With respect to the method for producing the trioxane, there is no particular limitation. As a stabilizer, an amine is incorporated into the trioxane in a proportion of generally 0.00001 to 0.003 mmol, preferably 0.00001 to 0.0005 mmol, and more preferably 0.00001 to 0.0003 mmol, per 1 mol of the trioxane. When the content of the amine is larger than the above range, an adverse effect, such as deactivation of the catalyst, would be caused. When the content of the amine is smaller than the above range, an adverse effect, such as generation of paraformaldehyde during the storage of the trioxane, would be caused.

In the present invention, as the amine to be incorporated into the trioxane, a primary amine, a secondary amine, a tertiary amine, an amine compound having an alcoholic hydroxyl group in the molecule thereof, an alkylated melamine, and a hindered amine compound may be used individually or in combination. As a primary amine, for example, n-propylamine, isopropylamine, or n-butylamine is suitably used. As a secondary amine, for example, diethylamine, di-n-propylamine, diisopropylamine, di-n-butylamine, piperidine, piperazine, 2-methylpiperazine, morpholine, N-methylmorpholine, or N-ethylmorpholine is suitably used. As a tertiary amine, for example, triethylamine, tri-n-propylamine, triisopropylamine, or tri-n-butylamine is suitably used. As an amine compound having an alcoholic hydroxyl group in the molecule thereof, for example, monoethanolamine, diethanolamine, triethanolamine, N-methylethanolamine, N,N-dimethylethanolamine, N-ethylethanolamine, N,N-diethylethanolamine, N-(β-aminoethyl)isopropanolamine, or hydroxyethylpiperazine is suitably used. As an alkylated melamine, for example, mono-, di-, tri-, tetra-, penta-, or hexamethoxymethylmelamine which is a methoxymethyl-substituted product of melamine, or a mixture thereof is suitably used. As a hindered amine compound, for example, bis(2,2,6,6-tetramethyl-4-piperidinyl) sebacate, bis(1,2,2,6,6-pentamethyl-4-piperidinyl) sebacate, tetrakis(2,2,6,6-tetramethyl-4-piperidinyl) 1,2,3,4-butanetetracarboxylate, poly[[6-(1,1,3,3-tetramethylbutyl)amino-1,3,5-triazin-2,4-diyl][(2,2,6,6-tetramethyl-4-piperidinyl)imino]hexamethylene[(2,2,6,6-tetramethyl-4-piperidinyl)imino]], 1,2,2,6,6-pentamethylpiperidine, a polycondensation product of dimethyl succinate and 1-(2-hydroxyethyl)-4-hydroxy-2,2,6,6-tetramethylpiperidine, or a condensation product of N,N'-bis(3-aminopropyl)ethylenediamine and 2,4-bis[N-butyl-N-(1,2,2,6,6-pentamethyl-4-piperidyl)amino]-1,3,5-triazine is suitably used. Of these, triethanolamine is most suitably used.

The 1,3-dioxolane used as a comonomer in the present invention is commercially available, or can be can be prepared by a method conventionally known to those skilled in the art. The method for producing 1,3-dioxolane is not particularly limited. In the present invention, 1,3-dioxolane is used in an amount of 5 to 7% by mass, based on the mass of the trioxane. When the amount of 1,3-dioxolane used is larger than the above range, the resultant extrusion molded article would become poor in mechanical strength, for example, an impact resistance, a flexural strength, a tensile strength, or creep properties. When the amount of 1,3-dioxolane used is smaller than the above range, the semicrystallization rate would be increased, so that the extrusion moldability would become poor.

For controlling the molecular weight of the obtained copolymer to adjust the MVR (Melt Volume Rate) or intrinsic viscosity, a chain transfer agent can be used in an amount of 0.01 to 0.3 % by mole relative to the trioxane. Examples of chain transfer agents include carboxylic acids, carboxylic anhydrides, esters, amides, imides, phenols, and acetal compounds. Particularly, phenol, 2,6-dimethylphenol, methylal, and polyoxymethylene dimethoxide are suitably used. Most preferred is methylal. The chain transfer agent is used as such or in the form of a solution. When the chain transfer agent is used in the form of a solution, examples of solvent for the solution include aliphatic hydrocarbons, such as hexane, heptane, and cyclohexane; aromatic hydrocarbons, such as benzene, toluene, and xylene; and halogenated hydrocarbons, such as methylene dichloride and ethylene dichloride.

Impurities contained in trioxane, such as water, formic acid, methanol, and formaldehyde, are inevitably generated when industrially producing trioxane, but the total content of impurities in trioxane is preferably 100 ppm or less, more preferably 70 ppm or less, and most preferably 50 ppm or less. Particularly, the content of water in trioxane is preferably 50 ppm or less, more preferably 20 ppm or less, and most preferably 10 ppm or less. Also, with respect to 1,3-dioxolane, like trioxane, the total content of impurities, such as water, formic acid, and formaldehyde, in 1,3-dioxolane is preferably 1,000 ppm or less, more preferably 200 ppm or less, particularly preferably 100 ppm or less, and most preferably 50 ppm or less. Moreover, because the activity of the catalyst is lowered by the presence of water, a method for preventing entry of water from the outside into the polymerization apparatus is preferably employed. Such a method includes a method in which the polymerization apparatus is always purged with an inert gas, such as nitrogen gas, during the polymerization reaction.

As the boron trifluoride used in the present invention, a coordination compound of boron trifluoride is preferably used. Such a compound is commercially available, or can be prepared by a method conventionally known to those skilled in the art. The coordination compound of boron trifluoride includes those with an organic compound having an oxygen atom or a sulfur atom. The above organic compound includes alcohols, phenols, acids, ethers, acid anhydrides, esters, ketones, aldehydes, and dialkyl sulfides. Of these, as a coordination compound of boron trifluoride, an etherate is preferred. Specific preferred examples thereof are diethyl etherate and dibutyl etherate of boron trifluoride. The amount of the boron trifluoride added is generally in the range of from 0.025 to 0.07 mmol, preferably 0.030 to 0.06 mmol, and most preferably 0.035 to 0.055 mmol, per 1 mol of trioxane, the main monomer. When the amount of the boron trifluoride added is larger than the above range, an adverse effect, such as an increase of the formate structure, would be caused. When the amount of the boron trifluoride added is smaller than the above range, an adverse effect, such as a lowering of the conversion in polymerization, would be caused. The boron trifluoride is used as such or in the form of a solution. When the boron trifluoride is used in the form of a solution, the solvent therefor includes aliphatic hydrocarbons, such as hexane, heptane, and cyclohexane; aromatic hydrocarbons, such as benzene, toluene, and xylene; and halogenated hydrocarbons, such as methylene dichloride and ethylene dichloride.

In the present invention, the polymerization time ranges generally 0.25 to 120 minutes, preferably 1 to 60 minutes, more preferably 1 to 30 minutes, and most preferably 2 to 15 minutes. When the polymerization time is longer than the above range, an unstable portion may be increased, and, when the polymerization time is shorter than the above range, the polymerization yield may be lowered.

In the present invention, the polymerization reaction can be carried out by solution polymerization performed in the presence of an inert solvent. However, it is preferably carried out by bulk polymerization performed using substantially no solvent, because the cost of solvent recovery is not required and the sterically hindered phenol exhibits a significant effect. When a solvent is used, the solvent includes aliphatic hydrocarbons, such as hexane, heptane, and cyclohexane; aromatic hydrocarbons, such as benzene, toluene, and xylene; and halogenated hydrocarbons, such as methylene dichloride and ethylene dichloride.

In the method of the present invention, the copolymerization reaction is preferably conducted using a polymerization apparatus in a continuous manner. In this case, preferred is a method in which the copolymerization reaction is conducted using two or more continuous polymerizers connected in series. A preferred example of the continuous polymerizer includes a kneader having at least two horizontal rotating shafts and having a screw blade or paddle blade in each of the rotating shafts.

In the method of the present invention, the copolymerization is conducted in the presence of a sterically hindered phenol. The amount of the sterically hindered phenol added ranges generally 0.006 to 2.0% by mass, preferably 0.01 to 0.5% by mass, and more preferably 0.02 to 0.1% by mass, based on the mass of trioxane. When the amount of the sterically hindered phenol used is larger than the above range, an adverse effect, such as lowering of the molecular weight of the formed crude oxymethylene copolymer, or lowering of the polymerization yield, would be caused. When the amount of the sterically hindered phenol used is smaller than the above range, an adverse effect would be caused, for example, an unstable portion, such as formate structure, is increased in the formed crude oxymethylene copolymer, so that the oxymethylene copolymer becomes poor in heat or hydrolytic stability.

The sterically hindered phenol is added as such or in the form of a solution. When the sterically hindered phenol is used in the form of a solution, the solvents therefor includes aliphatic hydrocarbons, such as hexane, heptane, and cyclohexane; aromatic hydrocarbons, such as benzene, toluene, and xylene; and halogenated hydrocarbons, such as methylene dichloride and ethylene dichloride. Alternatively, the monomer trioxane or the comonomer 1,3-dioxolane may be used as a solvent. For maintaining the activity of the sterically hindered phenol during the polymerization reaction, it is desired that part or all of the sterically hindered phenol is introduced as such or in the form of a solution through an inlet of the continuous polymerizer. A prescribed amount of the sterically hindered phenol may also be dissolved in advance in the trioxane to be charged into the above-mentioned polymerizer.

The sterically hindered phenols used in the polymerization in the present invention includes one or two or more types of sterically hindered phenols, such as dibutylhydroxytoluene, triethylene glycol-bis-3-(3-t-butyl-4-hydroxy-5-methylphenyl) propionate, pentaerythrityl-tetrakis-3-(3,5-di-t-butyl-4-hydroxyphenyl) propionate, hexamethylene bis[3-(3,5-di-t-butyl-4-hydroxyphenyl)propionate], 2,2'-methylene bis(6-t-butyl-4-methylphenol), 3,9-bis{2-[3-(3-t-butyl-4-hydroxy-5-methylphenyl)propionyloxy]-1,1-dimethylethyl}-2, 4,8,10-tetraoxaspiro[5.5]undecane, N,N'-hexane-1,6-diyl bis[3-(3,5-di-t-butyl-4-hydroxyphenyl)propionamide], and 1,6-hexanediyl 3,5-bis(1,1=dimethylethyl)-4-hydroxybenzenepropionate. Of these, triethylene glycol-bis-3-(3-t-butyl-4-hydroxy-5-methylphenyl) propionate, pentaerythrityl-tetrakis-3-(3,5-di-t-butyl-4-hydroxyphenyl) propionate, and 3,9-bis{2-[3-(3-t-butyl-4-hydroxy-5-methylphenyl)propionyloxy]-1,1-dimethylethyl}-2, 4,8,10-tetraoxaspiro[5.5]undecane are suitably used, and triethylene glycol-bis-3-(3-t-butyl-4-hydroxy-5-methylphenyl) propionate is most suitably used.

In the method of the present invention, generally, at a point in time when the copolymerization reaction gives a polymerization yield of 92% or more, preferably 95% or more, and more preferably 97% or more, a polymerization terminator is added to deactivate the catalyst (boron trifluoride), to terminate the copolymerization reaction. By providing a polymerization yield of 92% or more, a large amount of energy consumption for recovering unreacted monomers can be reduced, and this is of great commercial significance.

In the steps of subjecting trioxane and 1,3-dioxolane to a copolymerization reaction in the presence of boron trifluoride and a sterically hindered phenol, and contacting the formed copolymer with a polymerization terminator to terminate the copolymerization reaction, to obtain a crude oxymethylene copolymer, when the polymerization is terminated at a polymerization yield of less than 92%, an unstable portion having a formate structure easily affected by heat or hydrolysis is formed in a small amount in the crude oxymethylene copolymer, and hence the addition of a sterically hindered phenol has almost no effect, and further a very large amount of cost for recovering unreacted monomer is required. When the polymerization is terminated at a polymerization yield of 92% or more, the cost for recovering unreacted monomer is reduced; however, in the prior art, an unstable portion having a formate structure easily affected by heat or hydrolysis is vigorously formed in the crude oxymethylene copolymer. However, it has unexpectedly been found that, by conducting the copolymerization in the presence of a specific amount of boron trifluoride and a specific amount of a sterically hindered phenol and terminating the polymerization at a polymerization yield of 92% or more, the amount of an unstable portion having a formate structure formed in the crude oxymethylene copolymer can be drastically reduced.

From the viewpoint of the polymer quality, such as the amount of formalin generated or resident heat stability, of the final product, the content of formate group in 1 g of the polymer obtained after the termination of the polymerization is desirably 10 $\mu$mol or less, more desirably 9 $\mu$mol or less, and most desirably 8 $\mu$mol or less.

The termination of the polymerization reaction is made by contacting a polymerization terminator with the formed copolymer. The polymerization terminator is used as such or in the form of a solution or a suspension. The desirable way of contacting is to continuously introduce a small amount of a polymerization terminator or a solution or suspension of the polymerization terminator into the reaction system and to carry out grinding to put the terminator and the copolymer into contact with each other. When a washing step is carried out by, for example, introducing the copolymer into a large volume of a solution or suspension containing the polymerization terminator at the time of termination of the polymerization reaction, it necessitates an additional step of recovering or removing the solvent in the downstream stage. Thereby the process would become complicated and the facilities would inevitably be increased. This would render the process disadvantageous from a commercial point of view. A method in which a small amount of polymerization terminator is added to the reaction system containing the copolymer upon termination of the polymerization is more preferred from a commercial point of view. When a polymerization terminator is added to the reaction system, it is preferable to thereafter mix the terminator into the system using a mixer. As a mixer, a continuous mixer, such as a single- or twin-screw or paddle mixer, can be used. Further, it is preferred that the mixer and the continuous polymerizer used in the copolymerization reaction are connected in series.

As the polymerization terminator, a primary amine, a secondary amine, a tertiary amine, an alkylated melamine, a hindered amine compound, a trivalent organophosphorus compound, and an alkali metal or alkaline earth metal hydroxide are used individually or in combination. As a primary amine, for example, n-propylamine, isopropylamine, or n-butylamine is suitably used. As a secondary amine, for example, diethylamine, di-n-propylamine, diisopropylamine, di-n-butylamine, piperidine, or morpholine is suitably used. As a tertiary amine, for example, triethylamine, tri-n-propylamine, triisopropylamine, or tri-n-butylamine is suitably used. As an alkylated melamine, mono-, di-, tri-, tetra-, penta-, or hexamethoxymethylmelamine which is a methoxymethyl-substituted product of melamine, or a mixture thereof is suitably used. As a hindered amine compound, for example, bis(2,2,6,6-tetramethyl-4-piperidinyl) sebacate, bis(1,2,2,6,6-pentamethyl-4-piperidinyl) sebacate, tetrakis(2,2,6,6-tetramethyl-4-piperidinyl) 1,2,3,4-butanetetracarboxylate, poly[[6-(1,1,3,3-tetramethylbutyl)amino-1,3,5-triazin-2,4-diyl][(2,2,6,6-tetramethyl-4-pi peridinyl)imino]hexamethylene[(2,2,6,6-tetramethyl-4-piperidinyl)imino]], 1,2,2,6,6-pentamethylpiperidine, a polycondensation product of dimethyl succinate and 1-(2-hydroxyethyl)-4-hydroxy-2,2,6,6-tetramethylpiperidine, or a condensation product of N,N'-bis(3-aminopropyl)ethylenediamine and 2,4-bis[N-butyl-N-(1,2,2,6,6-pentamethyl-4-piperidyl)amino]-1,3,5-triazine is suitably used.

Of these, from the viewpoint of the hue, a hindered amine compound, a trivalent organophosphorus compound, and an alkylated melamine are preferred. As a hindered amine compound, bis(2,2,6,6-tetramethyl-4-piperidinyl) sebacate, bis(1,2,2,6,6-pentamethyl-4-piperidinyl) sebacate, a polycondensation product of dimethyl succinate and 1-(2-hydroxyethyl)-4-hydroxy-2,2,6,6-tetramethylpiperidine, or a condensation product of N,N'-bis(3-aminopropyl)ethylenediamine and 2,4-bis[N-butyl-N-(1,2,2,6,6-pentamethyl-4-piperidyl)amino]-1,3,5-triazine is most suitably used. As a trivalent organophosphorus compound, triphenylphosphine is most suitably used. As an alkylated melamine, hexamethoxymethylmelamine is most suitably used. When the polymerization terminator is used in the form of a solution or a suspension, the solvent to be used is not particularly limited. Not only water and alcohols, but also various aliphatic and aromatic organic solvents, such as acetone, methyl ethyl ketone, hexane, cyclohexane, heptane, benzene, toluene, xylene, methylene dichloride, and ethylene dichloride, can be used. Of these, preferred are water, alcohols, and aliphatic and aromatic organic solvents, such as acetone, methyl ethyl ketone, hexane, cyclohexane, heptane, benzene, toluene, and xylene.

Because the crude oxymethylene copolymer is produced at high yield, the copolymer after the termination of the polymerization can be transferred to the subsequent stabilization step as such. In the stabilization step, the stabilization methods described in items (A) and (B) below can be employed.

(A) Thermal stabilization method in which the above-obtained crude oxymethylene copolymer is melted by heating to remove the unstable portion.

(B) Method in which the above-obtained crude oxymethylene copolymer is hydrolyzed in an aqueous medium to remove the unstable portion.

The crude oxymethylene copolymer can be stabilized by any of the above methods, and then pelletized, to obtain a stabilized, moldable oxymethylene copolymer.

Of the above-mentioned methods, thermal stabilization method (A), of which the process is simpler than method (B), is preferred as an industrial method. Specifically, when method (A) is employed, it is preferred that the crude oxymethylene copolymer is melt-kneaded at a temperature in the range of from the melting temperature of the crude oxymethylene copolymer to a temperature 100°C higher than the melting temperature under a pressure of 760 to 0.1 mmHg. When the temperature for carrying out the thermal stabilization is lower than the melting temperature of the crude oxymethylene copolymer, a decomposition reaction of the unstable portion would be insufficient so that the stabilization effect would not be obtained. On the other hand, when the temperature is higher than the temperature 100°C higher than the melting temperature of the crude oxymethylene copolymer, yellowing would occur or the backbone chain of the polymer would be broken by the heat, and simultaneously an unstable portion would be formed to lower the heat stability, and therefore the result is not preferable. The range is preferably from 170 to 250°C, and most preferably from 180 to 235°C. When the pressure for carrying out the thermal stabilization is higher than 760 mmHg, the effect of removing from the system the decomposition gas produced by the decomposition of the unstable portion would be so poor that any sufficient stabilization effect would not be obtained. On the other hand, when the pressure is lower than 0.1 mmHg, an expensive apparatus is required for achieving such a high degree of vacuum, which would not be industrially beneficial, and also the molten resin would flow through a vacuum vent to cause operational troubles. The range is preferably from 740 to 10 mmHg, and most preferably from 400 to 50 mmHg. Further, the time of stabilization is appropriately selected from the range of from 5 minutes to 1 hour.

Further, in the present invention, a single-screw or twin- or multi-screw vented extruder can be used as the apparatus used in the above-mentioned thermal stabilization. For obtaining a required residence time, a method of arranging two or more extruders in series is an advantageous method. A method of using extruders having high degassing effect, such as ZSK extruder, ZDS extruder, manufactured by Werner GmbH & Co., in combination is a further advantageous method. Further, a method of using the above-mentioned extruder and a surface renewal-type mixer shown in the below-described Examples in combination is the most effective method.

In the above stabilization method (A), stabilization can be carried out by adding an antioxidant and a stabilizer, such as a heat stabilizer, to the crude oxymethylene copolymer during melt-kneading. Usually, the stabilization can be conducted in the presence of an antioxidant in an amount of 0.05 to 5% by mass and a nitrogen-containing compound in an amount of 0.005 to 5% by mass, each based on the mass of the crude oxymethylene copolymer.

The antioxidants usable in the above-mentioned thermal stabilization include one or two or more types of sterically hindered phenols, such as triethylene glycol-bis-3-(3-t-butyl-4-hydroxy-5-methylphenyl) propionate, pentaerythrityl-tetrakis-3-(3,5-di-t-butyl-4-hydroxyphenyl) propionate, 2,2'-methylenebis(6-t-butyl-4-methylphenol), 3,9-bis {2-[3-(3-t-butyl-4-hydroxy-5-methylphenyl)propionyloxy]-1,1-dimethylethyl}-2, 4,8,10-tetraoxaspiro[5.5]undecane, N,N'-hexane-1,6-diyl bis[3-(3,5-di-t-butyl-4-hydroxyphenyl)propionamide], and 1,6-hexanediyl 3,5-bis(1,1-dimethylethyl)-4-hydroxybenzenepropionate. The heat stabilizers include amine-substituted triazines, such as melamine, methylolmelamine, benzoguanamine, cyanoguanidine, and an N,N-diarylmelamine; nitrogen-containing compounds, such as a polyamide, an urea derivative, and an urethane; and inorganic acid salts, hydroxides, arid organic acid salts of sodium, potassium, calcium, magnesium, or barium.

The MVR of the oxymethylene copolymer obtained after the stabilization is adjusted to 0.5 to 20 cm$^3$/10 minutes, and is preferably to 0.5 to 6 cm$^3$/10 minutes, more preferably to 1 to 3 cm$^3$/10 minutes.

In the present invention, the isothermal semicrystallization time of the oxymethylene copolymer at 150°C is adjusted to 150 to 2,000 seconds depending on the amounts of catalyst and impurity during the polymerization. It is preferably adjusted to 200 to 1,000 seconds, and more preferably to 300 to 500 seconds. When the isothermal semicrystallization time of the oxymethylene copolymer is less than 150 seconds (the semicrystallization rate is fast), the molded article obtained from the copolymer by extrusion molding would suffer formation of markedly increased voids. In the present invention, the "isothermal semicrystallization time" means the time determined under the conditions shown in the Examples described below.

The oxymethylene copolymer obtained by the method of the present invention described above in detail has properties as excellent as those of an oxymethylene copolymer obtained by a conventional method, and can be used in the same applications as those for such an oxymethylene copolymer.

Further, in the oxymethylene copolymer produced by the method of the present invention, an additive, for example, a coloring agent, a nucleating agent, a plasticizer, a release agent, a fluorescent brightening agent, an antistatic agent, such as polyethylene glycol or glycerol, or a light stabilizer, such as a benzophenone compound or a hindered amine compound, can be added if desired.

The oxymethylene copolymer produced by the method of the present invention can be used in extrusion molding. For example, with a single-screw extruder or twin-screw extruder to which a mold having a desired shape is connected, the oxymethylene copolymer produced by the method of the present invention is fed to the extruder and extruded while melt-kneading at 180 to 240°C, and the molded article continuously discharged from the mold is cooled while drawing the article by rollers, for example, to obtain a resin material for cutting.

Representative examples of the resin materials for cutting obtained by the above-mentioned extrusion molding include a round bar having a diameter of 10 mm or more, a plate material having a thickness of 5 mm or more, and a material of a shaped section having a section thickness of 10 mm or more. These resin materials for cutting are machined by usual means, such as cutting using, for example, a lathe or a milling machine, into mechanical parts, automobile parts, or the like. Specific examples of machined parts include a screw, a bearing, nozzle parts, sensor parts, a gear, a roller, an axle, and a pallet.

EXAMPLES

Hereinbelow, the present invention will be described with reference to the following Examples and Comparative Examples, which should not be construed as limiting the scope of the present invention. The terms and measurement methods used in the Examples and Comparative Examples are described below.

Crude oxymethylene copolymer: The oxymethylene copolymer after the termination of polymerization and before the stabilization step is referred to as "crude oxymethylene copolymer".

(1) Formate group content:
About 12 mg of a crude oxymethylene copolymer powder, sampled before being subjected to the stabilization step, was weighed, and dissolved in 1 g of a hexafluoroisopropanol-$d_2$ solvent. The solution was subjected to a measurement by means of a nuclear magnetic resonance apparatus (JNM LA500; manufactured by JEOL LTD.). A formate group content was determined from the ratio of the area of a $^1$H peak appearing around 8.0 ppm assigned to the formate group to the area of a $^1$H peak appearing around 4.9 ppm assigned to the methylene backbone chain of the crude oxymethylene copolymer in the $^1$H-NMR chart. The content of the formate group in 1 g of the polymer was indicated using a unit: $\mu$mol.

(2) Polymerization yield:
20 g of a crude oxymethylene copolymer was immersed in 20 ml of acetone, and then filtered. The collected copolymer was washed with acetone three times and then, dried in vacuum at 60°C until the weight of the dried copolymer became constant. Then, the resultant copolymer was accurately weighed. The polymerization yield was determined from the following equation.

$$\text{Polymerization yield} = M1/M0 \times 100$$

M0: Mass before washing with acetone
M1: Mass after washing with acetone and drying

(3) MVR:
MVR was measured in accordance with ASTM-D1238 (at 190°C under a load of 2.16 kg).

(4) Melt-kneading:
Prescribed amounts of an antioxidant, a nitrogen-containing compound and others were weighed, and blended together with a crude oxymethylene copolymer using a Henschel mixer. The blend was then melt-kneaded by means of a twin-screw extruder (L/D = 30) at a cylinder temperature of 210°C, a screw revolution number of 30 rpm, an output rate of 10 kg/h, and a resin temperature of 225 to 235°C, followed by pelletization. The resultant pellets were used in the measurement of an isothermal semicrystallization time.

(5) Measurement of semicrystallization time:
Semicrystallization time was measured using a power compensation DSC (Pyris Diamond DSC, manufactured by PerkinElmer, Inc.) under a nitrogen gas stream in accordance with the following procedure.

(i) A pan having a sample thereon was placed on a sample holder, and the temperature was set to 30°C,
(ii) the temperature was raised from 30 to 210°C at a constant rate of 320°C/minute,
(iii) the temperature was maintained at 210°C for 5 minutes, and then
(iv) the temperature was lowered to 150°C at a constant rate of -80°C/minute, and
(v) the point in time when the temperature of the sample reached 150°C was taken as 0 second, and the period of time between the 0 second and the point of time when the exothermic curve reached to the top of the peak of semicrystallization was defined as the semicrystallization time.

(6) Checking the presence or absence of formed voids:
A round bar having a diameter of 50 mm was prepared by extrusion molding, and the cross-section of the resultant bar was observed.

Examples 1 to 8 and Comparative Examples 1 to 10

In a polymerization apparatus, which is a bench twin-screw kneader having an inner capacity of 1 L and equipped with a jacket and two Z-type blades, an oxymethylene copolymer was produced by polymerization in a batch-wise manner. Hot water of 85°C was circulated through the jacket, and further the inside of the apparatus was heated and dried using high-temperature air. Then, a cover was attached to the apparatus, and the system was purged with nitrogen. 320 g of 1,3,5-trioxane (to which was incorporated triethanolamine as a stabilizer, in a proportion of 0.00025 mmol per 1 mol of the trioxane), a prescribed amount of a comonomer (1,3-dioxolane), and a prescribed amount of a sterically hindered phenol (triethylene glycol-bis-3-(3-t-butyl-4-hydroxy-5-methylphenyl) propionate (trade name: Irganox 245, manufactured by BASF AG)) were charged through a raw material inlet. While stirring the resultant mixture by Z-type blades, a prescribed amount of boron trifluoride diethyl etherate as a catalyst in the form of a benzene solution (solution concentration: 0.6 mmol/g) was added to the mixture to initiate the polymerization. After the polymerization was conducted for 15 minutes, a benzene solution of triphenylphosphine (solution concentration: 5 mmol/ml) was added to the polymerization apparatus using a syringe in a molar amount corresponding to two times the molar amount of the catalyst used, and mixed for 15 minutes to terminate the polymerization, to obtain a crude oxymethylene copolymer. The polymerization yield and formate group content of the obtained crude oxymethylene copolymer were determined. Further, pellets were prepared by adding prescribed amounts of an antioxidant and a nitrogen-containing compound to the crude oxymethylene copolymer and melt-kneading the resultant mixture, and the resultant pellets were subjected to isothermal semicrystallization time measurement. The types and prescribed amounts of the comonomer, catalyst, sterically hindered phenol, antioxidant, and nitrogen-containing compound used and the results of the measurements are shown in Tables 1 and 2.

Examples 9 and 10 and Comparative Examples 11 and 12

A continuous polymerization apparatus was constituted by connecting two continuous polymerizers in series: wherein each polymerizer had a long casing having an inner cross-section seen like two circles that partially overlap; the major diameter of the inner cross-section was 100 mm; a jacket was provided around the apparatus; the long casing had therein a pair of shafts; a number of convex lens-type paddles meshing with one another were incorporated into each shaft; and the end of the convex lens-type paddle was designed so as to clean the inner surface of the casing and it was also designed so as to mutually clean the surface of the other convex lens-type paddle that meshes with that paddle. Subsequently, a polymerization terminator mixing machine was constituted by connecting a continuous mixer to the above-mentioned second-stage continuous polymerizer in series: wherein the continuous mixer had a structure similar to the above continuous polymerizer on the second stage; and it was designed so that a solution containing a polymerization terminator could be fed through a feed inlet portion to continuously mix the terminator with the polymer. Then, production of oxymethylene copolymer was conducted. To the inlet of the first-stage continuous polymerizer, trioxane (to which triethanolamine was incorporated as a stabilizer in a proportion of 0.00025 mmol per 1 mol of the trioxane) was fed at a rate of 200 kg/hr and a sterically hindered phenol in the form of a 1,3-dioxolane solution of 11 mass% was also fed so as to supply the sterically hindered phenol, of which the type and amount were shown in Tables 1 and 2. Further, 1,3-dioxolane was continuously fed through another line so as to adjust the total amount of 1,3-dioxolane fed to the range of 8 to 12 kg/hr. Simultaneously, boron trifluoride diethyl etherate as a catalyst was continuously fed in a proportion of 0.04 mmol per 1 mol of the trioxane. Boron trifluoride diethyl etherate and methylal were added individually in the form of a benzene solution. The total amount of benzene used was 1% by mass or less, based on the mass of the trioxane. Then, the polymerization terminator shown in Table 2 in a molar amount two times the molar amount of the catalyst used was continuously fed in the form of a benzene solution through the inlet of the polymerization terminator mixing machine to terminate the polymerization reaction, and the formed crude oxymethylene copolymer was obtained from the outlet. The continuous polymerization apparatus was operated for polymerization under conditions such that the number of revolutions of the first-stage shaft of the continuous polymerizer was about 35 rpm, the number of revolutions of the second-stage shaft was about 60 rpm, the first-stage jacket temperature was 85°C, the second-stage jacket temperature was 85°C, and the polymerization terminator mixing machine jacket temperature was 15°C. The polymerization time was about 10 minutes. The polymerization yield, formate group content, and semicrystallization time of the obtained crude oxymethylene copolymer were determined. Further, pellets were prepared by adding the predetermined antioxidant and nitrogen-containing compound to the crude oxymethylene copolymer and melt-kneading the resultant mixture, and the resultant pellets were subjected to isothermal semicrystallization time measurement. The types and prescribed amounts of the comonomer, catalyst, sterically hindered phenol, antioxidant, and nitrogen-containing compound used and the results of the measurements are shown in Tables 1 and 2.

[Table 1]

| | Copolymerization step | | | | | Crude oxymethylene copolymer physical properties |
|---|---|---|---|---|---|---|
| | TOX amount | DOL amount | Catalyst amount | Sterically hindered phenol (A) amount | Polymerization yield | Formate end |
| | (Reference mass) | DOL (mass%) based on TOX | (mmol/molTOX) | A (mass%) based on TOX | (mass%) | $\mu$mol/g-POM |
| Example 1 | 100 | 6 | 0.04 | 0.01 | 98 | 9 |
| Example 2 | 100 | 6 | 0.04 | 0.03 | 98 | 7 |
| Example 3 | 100 | 6 | 0.04 | 2 | 95 | 6 |
| Example 4 | 100 | 7 | 0.04 | 0.03 | 98 | 7 |
| Example 5 | 100 | 6 | 0.04 | 0.03 | 98 | 7 |
| Example 6 | 100 | 6 | 0.04 | 0.03 | 98 | 7 |
| Example 7 | 100 | 6 | 0.04 | 0.03 | 98 | 7 |
| Example 8 | 100 | 6 | 0.04 | 0.03 | 98 | 7 |
| Example 9 | 100 | 6 | 0.04 | 0.03 | 98 | 7 |
| Example 10 | 100 | 6 | 0.04 | 0.05 | 97 | 7 |
| Comparative example 1 | 100 | 6 | 0.04 | 0 | 98 | 11 |
| Comparative example 2 | 100 | 4 | 0.04 | 0.03 | 98 | 7 |
| Comparative example 3 | 100 | 13 | 0.04 | 0.03 | 94 | - |
| Comparative example 4 | 100 | 6 | 0.01 | 0.03 | 63 | - |
| Comparative example 5 | 100 | 6 | 0.08 | 0.03 | 99 | 18 |
| Comparative example 6 | 100 | 6 | 0.05 | 0.03 | 81 | - |
| Comparative example 7 | 100 | 6 | 0.04 | 0.03 | 98 | 7 |
| Comparative example 8 | 100 | 6 | 0.04 | 0.03 | 98 | 7 |
| Comparative example 9 | 100 | 6 | 0.04 | 0.03 | 98 | 7 |
| Comparative example 10 | 100 | 6 | 0.04 | 0.03 | 98 | 7 |
| Comparative example 11 | 100 | 6 | 0.04 | 0 | 98 | 11 |

(continued)

| | Copolymerization step | | | | | Crude oxymethylene copolymer physical properties |
|---|---|---|---|---|---|---|
| | TOX amount | DOL amount | Catalyst amount | Sterically hindered phenol (A) amount | Polymerization yield | Formate end |
| | (Reference mass) | DOL (mass%) based on TOX | (mmol/molTOX) | A (mass%) based on TOX | (mass%) | $\mu$mol/g-POM |
| Comparative example 12 | 100 | 4 | 0.04 | 0.03 | 98 | 7 |
| Abbreviations:<br>TOX = 1,3,5-Trioxane<br>DOL= 1,3-Dioxolane<br>Catalyst = Boron trifluoride diethyl etherate<br>A = Triethylene glycol-bis-3-(3-t-butyl-4-hydroxy-5-methylphenyl) propionate (trade name: Irganox 245, manufactured by BASF AG) | | | | | | |

[Table 2]

| | Stabilization step | | Oxymethylene copolymer physical properties | | | | |
|---|---|---|---|---|---|---|---|
| | Antioxidant | Nitrogen-containing compound | MVR | Semicrystallization time | Voids | Heat stability | Drawback |
| | (Part by mass) | (Part by mass) | $cm^3$/ 10 min. | Second | - | - | - |
| Example 1 | 0.3 | 0.05 | 2 | 370 | None | Excellent | - |
| Example 2 | 0.3 | 0.05 | 2 | 370 | None | Excellent | - |
| Example 3 | 0.3 | 0.05 | 2 | 400 | None | Excellent | - |
| Example 4 | 0.3 | 0.05 | 4 | 600 | None | Excellent | - |
| Example 5 | 0.05 | 0.05 | 2 | 380 | None | Excellent | - |
| Example 6 | 5 | 0.05 | 2 | 320 | None | Excellent | - |
| Example 7 | 0.3 | 0.005 | 2 | 380 | None | Excellent | - |
| Example 8 | 0.3 | 5 | 2 | 320 | None | Excellent | - |
| Example 9 | 0.3 | 0.05 | 3 | 370 | None | Excellent | - |
| Example 10 | 0.3 | 0.05 | 3 | 430 | None | Excellent | - |
| Comparative example 1 | 0.3 | 0.05 | 3 | 50 | Present | Excellent | - |
| Comparative example 2 | 0.3 | 0.05 | 3 | 50 | Present | Excellent | - |
| Comparative example 3 | 0.3 | 0.05 | 8 | 1000< | None | Excellent | Low strength |
| Comparative example 4 | 0.3 | 0.05 | 15 | 350 | None | Excellent | High recovery cost |
| Comparative example 5 | 0.3 | 0.05 | 5 | 80 | Present | Poor | - |
| Comparative example 6 | 0.3 | 0.05 | 10 | 360 | None | Excellent | High recovery cost |
| Comparative example 7 | 0.01 | 0.05 | 2 | 400 | None | Excellent | Rapid deterioration |
| Comparative example 8 | 10 | 0.05 | 6 | 30 | Present | Poor | Bad MD |
| Comparative example 9 | 0.3 | 0.001 | 2 | 390 | None | Excellent | Bad odor |
| Comparative example 10 | 0.3 | 10 | 2 | 100 | Present | Poor | Bad MD |
| Comparative example 11 | 0.3 | 0.05 | 1 | 200 | Present | Excellent | - |
| Comparative example 12 | 0.3 | 0.05 | 1 | 40 | Present | Excellent | - |

Antioxidant: Triethylene glycol-bis-3-(3-t-butyl-4-hydroxy-5-methylphenyl) propionate (trade name: Irganox 245, manufactured by BASF AG)
Nitrogen-containing compound: 1,3,5-Triazine-2,4,6-triamine (trade name: Melamine, manufactured by Mitsui Chemicals, Inc.)

It is found that the formate group content was small and formation of voids or white crazing did not occur in each of Examples 1 to 8, in which trioxane and 1,3-dioxolane in an amount of 5 to 7% by mass based on the mass of the trioxane were subjected to the polymerization in the presence of a sterically hindered phenol, and the polymerization was terminated at a polymerization yield of 92% or more. As can be seen from the comparison with Comparative Examples 1 and 12, the formate group content was high when no sterically hindered phenol was present. In Comparative Examples 2 and 13, in which the amount of 1,3-dioxolane was 4 parts by mass, the semicrystallization time was short and white crazing occurred. To the contrary, in Comparative Example 3, in which the amount of 1,3-dioxolane was 13 parts by mass, the molded specimen was poor in the mechanical strength. In Comparative Example 4, in which the amount of boron trifluoride diethyl etherate was 0.01 mmol per 1 mol of the trioxane, and in Comparative Example 6, in which the polymerization terminator was added at a stage in which the polymerization did not sufficiently proceed, the polymerization yield was not increased, and as the result, the cost of the trioxane recovery would be increased. In Comparative Example 5, in which the amount of boron trifluoride diethyl etherate was 0.07 mmol or more per 1 mol of the trioxane, the formate group content was increased although the polymerization yield was 92% or more. When the polymerization yield was as low as about 80%, the presence or absence of the sterically hindered phenol gave no observable difference. In Comparative Example 7, in which the amount of antioxidant used in the stabilization was small, oxidative deterioration due to air was remarkable. In Comparative Example 9, in which the amount of nitrogen-containing compound used in the stabilization was small, the odor of formaldehyde became bad. To the contrary, when the amount of antioxidant or nitrogen-containing compound used in the stabilization was large (Comparative Examples 8 and 10), a number of mold deposits (MD) were caused upon molding. As compared with Comparative Examples 11 and 12, Examples 9 and 10 demonstrated a higher formate group reducing effect and extrusion moldability improving effect, which were achieved by the addition of a sterically hindered phenol in the polymerization conducted under the conditions presumed for the actual production facilities. Comparison of Examples 9 and 10 vs. Comparative Example 11 showed that addition of a sterically hindered phenol gave more advantageous results from the viewpoint of the polymer quality of final products, such as lower formate group content and higher extrusion moldability (long semicrystallization time). Further, comparison with Comparative Example 12, in which the amount of 1,3-dioxolane was 4 parts by mass, showed that the semicrystallization time was short, and white crazing occurred.

**Claims**

1. A method for producing an oxymethylene copolymer, comprising the steps of:

   subjecting a monomer raw material comprising trioxane and 1,3-dioxolane in an amount of 5 to 7% by mass based on the mass of the trioxane, to a copolymerization reaction, in the presence of boron trifluoride in a proportion of 0.025 to 0.07 mmol per 1 mol of the trioxane and a sterically hindered phenol in an amount of 0.006 to 2.0% by mass based on the mass of the trioxane;
   at a point in time when the copolymerization reaction gives a polymerization yield of 92% or more, adding a polymerization terminator to the reaction system to terminate the copolymerization reaction, to obtain a crude oxymethylene copolymer; and
   thermally stabilizing the crude oxymethylene copolymer by heat-melting the crude oxymethylene copolymer in the presence of an antioxidant in an amount of 0.05 to 5% by mass and a nitrogen-containing compound in an amount of 0.005 to 5% by mass, each based on the mass of the crude oxymethylene copolymer.

2. The method according to claim 1, wherein an amine is contained in the trioxane in a proportion of 0.00001 to 0.003 mmol per 1 mol of the trioxane.

3. The method according to claim 1 or 2, wherein the antioxidant is a sterically hindered phenol.

4. The method according to any one of claims 1 to 3, wherein the nitrogen-containing compound is at least one member selected from the group consisting of melamine, methylolmelamine, benzoguanamine, cyanoguanidine, an amine-substituted triazine, a polyamide, an urea derivative, and an urethane.

5. The method according to any one of claims 1 to 4, wherein the polymerization terminator is at least one member selected from the group consisting of triphenylphosphine, a hindered amine compound, and an alkylated melamine.

6. The method according to any one of claims 1 to 5, wherein, at a point in time when the copolymerization reaction gives a polymerization yield in 97% or more, the polymerization terminator is added to the reaction system to terminate the copolymerization reaction.

7. The method according to any one of claims 1 to 6, which is performed using a continuous polymerization apparatus comprising a continuous polymerizer and a polymerization terminator mixing machine which are connected in series.

8. The method according to claim 7, wherein a part of or all of the sterically hindered phenol is added through an inlet of the continuous polymerizer.

9. The method according to any one of claims 1 to 8, wherein the thermal stabilization step is performed by melt-kneading the crude oxymethylene copolymer at a temperature in the range of from the melting temperature of the crude oxymethylene copolymer to a temperature 100°C higher than the melting temperature under a pressure of 760 to 0.1 mmHg.

10. The method according to any one of claims 1 to 9, wherein the thermal stabilization step is performed by means of an apparatus comprising a combination of a single-, twin- or multi-screw vented extruder and a surface renewal-type mixer.

11. The method according to any one of claims 1 to 10, wherein the crude oxymethylene copolymer as such is subjected to the thermal stabilization step.

## INTERNATIONAL SEARCH REPORT

| International application No. |
| --- |
| PCT/JP2014/063733 |

A. CLASSIFICATION OF SUBJECT MATTER
*C08G2/04*(2006.01)i, *C08G2/06*(2006.01)i, *C08G2/10*(2006.01)i

According to International Patent Classification (IPC) or to both national classification and IPC

B. FIELDS SEARCHED

Minimum documentation searched (classification system followed by classification symbols)
C08G2/00-2/38

Documentation searched other than minimum documentation to the extent that such documents are included in the fields searched
Jitsuyo Shinan Koho         1922-1996   Jitsuyo Shinan Toroku Koho   1996-2014
Kokai Jitsuyo Shinan Koho    1971-2014   Toroku Jitsuyo Shinan Koho   1994-2014

Electronic data base consulted during the international search (name of data base and, where practicable, search terms used)

C. DOCUMENTS CONSIDERED TO BE RELEVANT

| Category* | Citation of document, with indication, where appropriate, of the relevant passages | Relevant to claim No. |
| --- | --- | --- |
| Y | WO 02/077049 A1 (Mitsubishi Gas Chemical Co., Inc.), 03 October 2002 (03.10.2002), column 6, lines 1 to 2, 3 to 11; column 7, lines 15 to 16; column 8, lines 1 to 13; column 13, line 12 to column 14, line 7 & US 2003/0125512 A1     & EP 1275671 A1 & WO 2002/077049 A1     & DE 60220479 D & DE 60220479 T          & KR 10-0740812 B1 | 1-11 |
| Y | JP 03-063965 B2 (Polyplastics Co., Ltd.), 03 October 1991 (03.10.1991), claims; column 3, lines 15 to 19, 33 to 38; column 4, lines 3 to 7; column 5, lines 18 to 21, 24 to 29, 34 to 38 & US 4579935 A1     & EP 128739 A1 & DE 3479125 D      & AU 2913584 A | 1-11 |

☐ Further documents are listed in the continuation of Box C.    ☐ See patent family annex.

| * | Special categories of cited documents: |
| --- | --- |
| "A" | document defining the general state of the art which is not considered to be of particular relevance |
| "E" | earlier application or patent but published on or after the international filing date |
| "L" | document which may throw doubts on priority claim(s) or which is cited to establish the publication date of another citation or other special reason (as specified) |
| "O" | document referring to an oral disclosure, use, exhibition or other means |
| "P" | document published prior to the international filing date but later than the priority date claimed |

| "T" | later document published after the international filing date or priority date and not in conflict with the application but cited to understand the principle or theory underlying the invention |
| --- | --- |
| "X" | document of particular relevance; the claimed invention cannot be considered novel or cannot be considered to involve an inventive step when the document is taken alone |
| "Y" | document of particular relevance; the claimed invention cannot be considered to involve an inventive step when the document is combined with one or more other such documents, such combination being obvious to a person skilled in the art |
| "&" | document member of the same patent family |

| Date of the actual completion of the international search | Date of mailing of the international search report |
| --- | --- |
| 19 August, 2014 (19.08.14) | 02 September, 2014 (02.09.14) |

| Name and mailing address of the ISA/ Japanese Patent Office | Authorized officer |
| --- | --- |
| Facsimile No. | Telephone No. |

Form PCT/ISA/210 (second sheet) (July 2009)

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP H08325341 A
- JP H0363965 B
- JP H07242652 A
- JP H11269165 A
- JP H06212054 A
- JP H07207117 A
- JP H07292216 A
- JP H09067503 A
- JP H09052926 A
- JP 2003064141 A